# EUROPEAN PATENT SPECIFICATION

(11) **EP 3 526 792 B1**
(45) Date of publication and mention of the grant of the patent: **01.09.2021**
(21) Application number: 17787572.1
(22) Date of filing: 13.10.2017
(51) Int. Cl.: G10L 25/78, G10L 25/84, G10L 25/18, G10L 25/21

(54) **VOICE ACTIVITY DETECTION METHOD AND APPARATUS**
VERFAHREN UND VORRICHTUNG ZUR ERKENNUNG VON SPRACHAKTIVITÄTEN
PROCÉDÉ ET APPAREIL DE DÉTECTION D'ACTIVITÉ VOCALE

(30) Priority: 16.10.2016 GB 201617544
(43) Date of publication of application: 21.08.2019
(73) Proprietor: Babylon Partners Limited, London SW3 3DD (GB)
(72) Inventor: GUAZZI, Alessandro Rodolfo, London, Greater London SE1 4YJ (GB); OSIPOV, Maxim, Thame, Oxfordshire OX9 3EZ (GB)
(74) Representative: Granleese, Rhian Jane
(86) International application number: PCT/GB2017/053099
(87) International publication number: WO 2018/069719

(56) References cited:
- US-A1- 2005 108 004
- US-A1- 2009 254 341
- US-A1- 2012 253 813
- KUN-CHING WANG ET AL: "Voice Activity Detection Algorithm with Low Signal-to-Noise Ratios Based on Spectrum Entropy", UNIVERSAL COMMUNICATION, 2008. ISUC '08. SECOND INTERNATIONAL SYMPOSIUM ON, IEEE, PISCATAWAY, NJ, USA, 15 December 2008 (2008-12-15), pages 423-428, XP031378978, ISBN: 978-0-7695-3433-6

## Description

### BACKGROUND

Methods to detect voice have seen growth, particularly for use in telecommunications. Conventional methods include calculating the loudness of the input signal and estimating periods of power above a given threshold as voice activity, or calculating the spectral flatness of the input signal and estimating periods of spectral flatness below a given threshold as period including voice activity. The problem with such methods is that they are prone to false measurements, misclassifying noise as speech, particularly in noisy environments in which there is intense background noise or in which the loudness of the voice is very low. In particular, using the spectral flatness of the signal alone is prone to misclassifying pure tones (such as whistling) and music as voice activity, and misclassifying multi-voice conversations as noise. This problem is particularly compounded in situations in which monitoring is continuous and extended over the course of several days, weeks, or months, and situations in which the microphone is in a variety of environments including, for example, when the microphone is in a pocket or a bag.

KUN-CHING WANG ET AL: "Voice Activity Detection Algorithm with Low Signal-to-Noise Ratios Based on Spectrum Entropy", UNIVERSAL COMMUNICATION, 2008. ISUC '08. SECOND INTERNATIONAL SYMPOSIUM ON, IEEE, PISCATAWAY, NJ, USA, 15 December 2008 (2008-12-15), pages 423-428, relates to a robust voice activity detection algorithm for detecting voice activity in noisy environments, that utilizes the entropy measurement defined in band-splitting spectrum domain to exploit the formant frequency representation as a highly efficient, compact representation of the time-varying characteristics of speech.US 2009/254341 A1 relates to a speech judging apparatus that comprises: a spectrum calculating unit that calculates, for each of the frames, a spectrum by performing a frequency analysis on an acoustic signal; an estimating unit that estimates a noise spectrum; an energy calculating unit calculates an energy characteristic amount; an entropy calculating unit that calculates a normalized spectral entropy value; a generating unit that generates a characteristic vector based on the energy characteristic amounts and the normalized spectral entropy values that have been calculated for a plurality of frames; a likelihood calculating unit that calculates a speech likelihood value of a target frame that corresponds to the characteristic vector; and a judging unit that compares the speech likelihood value to a threshold value.

US 2005/108004 A1 relates to a voice activity detector that detects talkspurts in an input signal, comprising: a frequency spectrum calculator that calculates frequency spectrum of the input signal; a flatness evaluator that calculates a flatness factor indicating flatness of the frequency spectrum; and a voice/noise discriminator that determines whether the input signal contains a talkspurt, by comparing the flatness factor of the frequency spectrum with a predetermined threshold.

### TECHNICAL FIELD

The present invention relates to the detection of voice activity in a noisy setting, for example, to determine whether a human voice is present in an audio recording. In more detail, it relates to the analysis of audio signals to determine which sections of the audio signal contain episodes of human voice. Being able to detect episodes of human voice through audio analysis techniques is advantageous as it can allow further voice and speech analysis algorithms to work more accurately and with fewer resources.

### SUMMARY

According to an aspect of the present invention, there is provided a method for detecting voice activity as set-out in Claim 1. Optional features of this aspect of the invention are set-out in Claims 2 to 10.

According to another aspect of the present invention, there is provided a computer-readable medium as set-out in Claim 11.

According to another aspect of the present invention, there is provided an apparatus as set-out in Claim 12.

In an embodiment, there is provided a method of detecting and displaying episodes of human voice, comprising the steps of: acquiring one or more audio samples of an environment in which a human voice may be expected, estimating the power spectra of the audio signals, processing the power spectra to obtain an energy band ratio of the signal, processing the power spectra to obtain the spectral flatness, calculating the ratio of the spectral flatness and the energy band ratio, and setting a threshold above which the signal is classified as a voice activity segment.

The power spectrum may be, for example, calculated using standard spectral density estimation techniques such as the periodogram, by applying Welch's method or other periodogram estimation methods that estimate the power of a spectrum, or other spectral density estimation methods employing the Fourier Transform or the Fast Fourier Transform, or other spectral density estimation techniques that transform the audio signal in the time domain into a spectrum in the spectral domain.

Preferably, the input signal is pre-processed by standard signal-processing techniques prior to the spectral analysis step, for example, to reduce the well-reported effect of spectral leakage. As an example, the mean of the input digital signal may be subtracted from the signal and a Hamming window may be applied to the signal. Other windowing techniques may be used as best suit the application and the quality of the signal.

The spectral flatness may be, for example, the ratio of the geometric mean and arithmetic mean of the power spectrum, or another technique that estimates the degree of entropy in the signal (i.e. an entropy value). The spectral flatness may be evaluated over the whole spectrum or for part of it only, for example only in the range of interest for voice detection. For instance, the spectral flatness could be calculated only between 230 Hz and 2000 Hz. The formulation of the spectral flatness as a ratio of the geometric mean and the arithmetic mean can be shown to mathematically differentiate between Gaussian noise and structured spectra such as in speech and can be computed efficiently (unlike other methods of estimating spectral flatness).

The energy band ratio of the signal may be, for example, the ratio of, in the numerator a sum of a first plurality of segments of the power spectrum (energy bands), where each segment is divided by its frequency width, and in the denominator a sum of a second plurality of segments of the power spectrum, where each segment is also divided by its frequency width. The first and the second plurality of segments may be at least partially different to one another.

The frequency ranges of the segments may overlap and may be, for example, selected on the basis of the range of frequencies expected within the human voice for the numerator, and frequencies associated with noise for the denominator, or via a data-driven method, such as by evaluating the optimal frequency bands to be used by testing the response of the energy band ratio of the signal for different voices on different microphones. An example of the frequency ranges of segments determined by such a method would be, for instance, in the numerator segments of the power spectrum in the ranges 125-250 Hz, 250-500 Hz, 500-1000 Hz, and in the denominator segments of the power spectrum in the ranges 0-25 Hz, 25-125 Hz, 1000-2000 Hz, 2000-4000 Hz. Calculating the energy band ratio helps to reduce the detection of false positive instances of voice activity. For example, it can avoid music activity being detected as voice activity when used in conjunction with the spectral flatness estimation.

Preferably, the input audio signal is a digital audio signal and temporally windowed, the window length being based on the particular application, for example, based on the power requirements for the calculations and the real-time requirements of the application and the sampling frequency of the audio recording. For example, windows from 12 milliseconds to 120 milliseconds in duration may be used with sampling frequencies varying from 8000 Hz to 96000 Hz. If the input audio signal is not a digital signal, but analogue, standard analogue-to-digital components and processes can be used to transform the analogue signal into a digital signal.

The input signal may be an audio recording, or a digital signal produced by a microphone in real time. Examples of the latter are the signals may be obtained from microphones present on phones, headsets, computers, and smart-watches. Thus, the voice activity detection may be used in real-time to detect if a person is speaking while a microphone is recording.

Thus, the input signal can be a time series of sound data, and it can comprise of several channels from different microphones operating on a recording device. Preferably, if multiple microphones are present, each microphone is treated individually.

The invention may be embodied in a computer program comprising program code means for executing on a computer system the method steps. Alternatively, it can be embodied in firmware or hardware, or as program code for computing devices such as smartphones and wearables.

In an embodiment, an apparatus for analysing an input signal to detect the presence of human voice activity in the signal is provided, the apparatus comprising an input for receiving the input signal, a processor for processing the input signal, wherein the processor is configured to execute the method described herein. The apparatus further includes an output to output the ratio or the signal detected, for example by means of a display. The apparatus further comprises memory (e.g. non-tangible memory) configured to store the computer program described herein. In one example, the method described herein is a computer-implemented method.

### BRIEF DESCRIPTION OF THE DRAWINGS

The invention will be further described by way of example with reference to the accompanying drawings in which:
Figure 1 is a flow diagram that illustrates the method of one embodiment of the invention;
Figure 2 shows the results of applying the embodiment of Figure 1 to an intermittent day-long audio recording; and
Figure 3 is a schematic illustrating the voice activity detection apparatus according to an embodiment of the invention.

### DETAILED DESCRIPTION

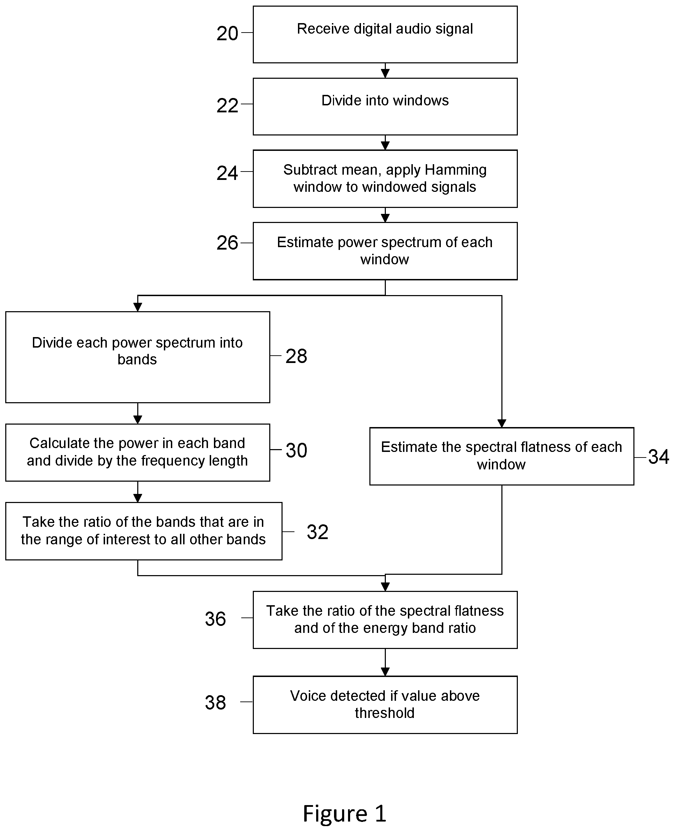

Figure 1 is a flow diagram illustrating the application of an embodiment of the invention to the analysis of an audio signal derived from a smartphone microphone. In step 20, a digital audio signal from the microphone of a smartphone collects audio information of the environment around the microphone, for example at a sampling rate fₛ of 8000Hz. In step 22, the signal is divided into non-overlapping windows of 512 samples each (64ms long). Longer and shorter windows can be used and can be overlapping.

Steps 24 to 38 now refer to calculations carried out on each window rather than on the signal as a whole. In step 24, for each window the mean is subtracted from the signal to detrend it, and a Hamming window of the same size of the window is applied to the window to reduce spectral leakage in the spectral density estimation calculation of step 26. Any other windowing technique or windowing method may also be used, and the signal is typically already zero-centred so may not require a mean subtraction. In step 26, the power spectrum for the window in question is obtained for example by using a standard spectral analysis technique such as the Welch periodogram.

Steps 28 to 32 describe the calculation of the energy band ratio.

In step 28, the power spectrum is divided into energy bands, for example limited by frequency values of {0, 50, 250, 500, 1000, 2000, fs/2} Hz, or in other words the spectrum is divided into a plurality bands with each band having one of the following range of frequencies: 0-50 Hz, 50-250 Hz, 250-500 Hz, 500-1000 Hz, 1000-2000 Hz and 2000-4000 Hz for a sampling frequency (fs) of 8000 Hz. Other energy band ranges may also be used, including overlapping band ranges. For instance, a plurality of non-overlapping bands such as 0-25 Hz, 25-125 Hz, 125-250 Hz, 250-500 Hz, 500-1000 Hz and 1000-2000 Hz may be selected or a plurality of overlapping bands such as 0-50 Hz, 25-125 Hz, 125-350 Hz, 250-500 Hz, 400-1500 Hz and 1000-2000 Hz may be selected.

In step 30, the cumulative power within each energy band is calculated, and each energy band is normalised by the frequency range of each energy band respectively.

In step 32, the energy band ratio is found by calculating the ratio of the sum of the normalised cumulative power values for each energy band within a first frequency range, such as the expected frequency range for voice, against the sum of the normalised cumulative power values for each energy band within a second frequency range, such as energy bands associated with background noise. For example, the range of frequency bands in the numerator is 250-2000 Hz and the range of frequency bands in the denominator comprises the bands within the 0-250 Hz frequency range and the 2000-4000 Hz frequency range. In another example, the normalised cumulative power values in the range between 250Hz and 2000Hz may be, for example, used as the numerator, although other values may be chosen. The range of frequencies used for the normalised cumulative power values in the denominator may be all of the frequencies present in the signal, or in other words the second frequency range may be between the lowest and the highest frequency in the signal.

In step 34, the spectral flatness of all or part of the power spectrum is estimated by dividing the geometric mean of the power spectrum by the arithmetic mean of the power spectrum. Other methods to estimate the spectral flatness may also be used. Step 34 may be run in parallel, prior to, or after steps 28 to 32.

In step 36, the voice activity ratio is taken as the ratio of the spectral flatness and the energy band ratio. For instance, the voice activity ratio may be calculated by dividing the spectral flatness by the energy band ratio. In another example, the voice activity ratio may be calculated by dividing the energy band ratio by the spectral flatness ratio. In both of these examples, a ratio is determined which is indicative of a relationship between the energy band ratio and the spectral flatness. Then in step 38, the detection of voice activity is made by comparing the voice activity ratio to a pre-defined threshold. In one example, the pre-defined threshold is a threshold chosen from a range of 50-10000. The threshold may change depending on the level of sensitivity and specificity desired for the application and the context of the user. The threshold may be set, for example, ahead of use for example by selecting the optimal threshold for use across different microphones and the optimal threshold for each individual microphone, depending on the hardware characteristics and pre-processing steps applied by the microphone. The threshold may also be set, for example, dynamically to optimise for the settings of the microphone and noise levels present.

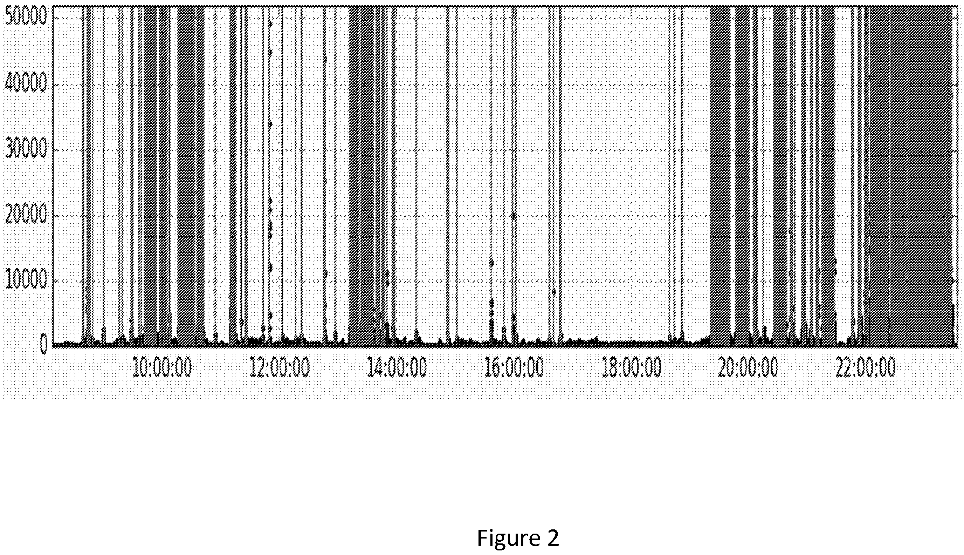

Figure 2 shows the results of applying this example of the invention to a day-long (or 24-hour period) recording carried out using a smartphone. The dots indicate the values of the voice activity ratio. The lines indicate periods in which voice activity has been detected, using a threshold of 400. As can be seen, the invention is suitable for near-real-time analysis over long periods of time using relatively few resources.

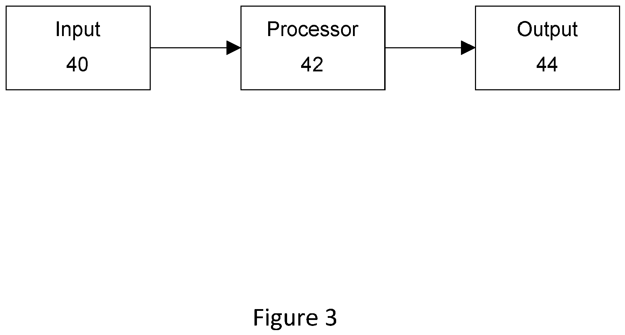

An embodiment of this invention may be a computer program for running on a computer system which receives the input audio data time series and estimates the result of the voice detection. The voice activity ratio may also be displayed. Alternatively, the invention may be incorporated into a dedicated apparatus, such as a monitor, which is shown as a schematic in Figure 3. The apparatus comprises an input 40 for receiving the input data, a process 42 for executing the processing steps described above, and an output 44, for example a display, for outputting the detection of the voice or the voice activity ratio. Alternatively, the output may feed the windowed data for further processing into other methods, for example a speech method or person-identification method, or screen windowed data from being passed into the methods to avoid running them continuously.

The systems and methods described herein may be used to identify the frequency and duration of voiced and unvoiced segments in noisy contexts over extended periods of time.

One example includes monitoring the frequency and duration of voice episodes in association with a user over an extended period of time (for example of over a day), and if this frequency or duration is decreasing this can determine that the user is unsafe, unwell or socially withdrawn. In response, this determination may initiate a suggestion, such as activities, events, or meetings that can help improve the user's situation. The suggestion may be provided via an audio or visual alert generated via a device such as smartphone or tablet. This device may be the same device used to monitor voice activity.

Another example, may include monitoring the frequency and duration of voice episodes in association with a user, and if this frequency is low (or zero) determining that the user is unsafe and/or so as to measure loneliness or social isolation quantitatively.

Another example, may include monitoring the frequency or duration of voice episodes in association with the user to evaluate symptoms associated with a health condition, such as for example a mental health condition including depression or age related disorders and/or to evaluate a sociability score for the user.

Another example, may include the monitoring of the frequency and duration of unvoiced segments during a conversation, for example to detect or monitor anxiety or stress.

Another example, may include the monitoring of the frequency and duration of unvoiced segments during a conversation for example to detect or monitor health conditions such as for example a mental health condition.

In another example, voice activity is detected as a pre-processing step to the detection of speech through the analysis of the segments of signal identified as containing voice activity by the method.

In another example, voice activity is detected as a pre-processing step to the recognition of speech, for example the detection of the words being said or the language being used, through the analysis of the segments of signal identified as containing voice activity by the method.

In another example, voice activity is detected as a pre-processing step to the determination of the number of people speaking through the analysis of the segments of signal identified as containing voice activity by the method.

In another example, the method described herein is used as a pre-processing step to the identification of people speaking through the analysis of the segments of signal identified as containing voice activity by the method.

In another example, the method described herein is used as a pre-processing step to the detection of illnesses from the change in tone associated with voice through the analysis of the segments of signal identified as containing voice activity by the method.

In another example, the method described herein is used to identify audio segments identified by the method as containing human speech in an audio track or a recording, for example the audio track of a film.

In another example, the method described herein is used to identify the frequency and duration of voice activity in a particular location so as to determine how sociable the location is, as may be used for example by planners, architects or interior designers to design spaces.

The above-mentioned examples may be used in conjunction with the method described herein for detecting voice activity or with another method for detecting voice activity.

## Claims

1. A method for detecting voice activity, the method comprising:
receiving an input audio signal;
estimating a power spectrum of the input audio signal;
calculating an energy band ratio of the input audio signal for a first set of frequency ranges of the input audio signal to a second set of frequency ranges of the input audio signal;
calculating an entropy value of the input audio signal;
calculating a voice activity ratio based on the entropy value and the energy band ratio;
outputting an output signal indicating that the input audio signal comprises a voice episode, if the voice activity ratio is above a predefined threshold,
wherein calculating an entropy value of the signal comprises calculating a spectral flatness of the signal, and
wherein the spectral flatness is calculated by calculating a geometric mean of the power spectrum and an arithmetic mean of the power spectrum and dividing the geometric mean of the power spectrum by the arithmetic mean of the power spectrum.

2. The method according to claim 1 wherein the input audio signal is a digital audio sample.

3. The method according to claim 1 wherein the power spectrum is calculated by estimating a periodogram of the input audio signal in the time domain.

4. The method according to any one of the preceding claims wherein the input audio signal is pre-processed before estimating the power spectrum, by detrending the input signal and applying a windowing function to the input signal.

5. The method according to any one of the preceding claims wherein the energy band ratio is calculated using a ratio of energy bands between 250Hz and 2000Hz against all other energy bands in the input audio signal, wherein the energy bands are segments of the power spectrum.

6. The method according to any one of the preceding claims wherein the spectrum is divided into bands of 0-50 Hz, 50-250 Hz, 250-500 Hz, 500-1000 Hz, 1000-2000 Hz and 2000-fs Hz; or
bands of 0-25 Hz, 25-125 Hz, 125-250 Hz, 250-500 Hz, 500-1000 Hz and 1000-2000 Hz; or
bands of 0-50 Hz, 25-125 Hz, 125-350 Hz, 250-500 Hz, 400-1500 Hz and 1000-2000 Hz.

7. The method according to any one of the preceding claims wherein the predefined threshold is determined based on a desired sensitivity and/or specificity, and/or, wherein the pre-determined threshold is in a range between 50 and 10000.

8. The method according to any of the preceding claims wherein the input audio signal is temporally windowed and the method is performed for each window, and/or wherein the input audio signal is divided into windows, of preferably 12 to 120 milliseconds in duration, and the method is performed for each window.

9. The method according to claim 8, wherein the windows are overlapping windows, preferably wherein the overlap between adjacent windows is between 1 and 110 milliseconds in duration.

10. The method according to any one of the preceding claims, wherein the input audio signal is a time series of digital audio data from an audio recording device, and/or wherein the input audio signal is an analogue audio data time series that is discretised and converted into a digital audio time series prior to performing the method.

11. A computer-readable medium comprising instructions which, when executed by a computer, cause the computer to carry out the method of any preceding claim.

12. An apparatus for detecting voice activity, the apparatus comprising:
an input for receiving an input audio signal;
a processor, wherein the processor is configured to:
estimate a power spectrum of the input audio signal;
calculate an energy band ratio of the input audio signal for a first set of frequency ranges of the input audio signal to a second set of frequency ranges of the input audio signal;
calculate an entropy value of the input audio signal; and
calculate a voice activity ratio based on the entropy value and the energy band ratio; and
an output for outputting an output signal indicating that the input audio signal comprises a voice episode, if the voice activity ratio is above a predefined threshold,
wherein calculating an entropy value of the signal comprises calculating a spectral flatness of the signal, and
wherein the spectral flatness is calculated by calculating a geometric mean of the power spectrum and an arithmetic mean of the power spectrum and dividing the geometric mean of the power spectrum by the arithmetic mean of the power spectrum.

## Patentansprüche

1. Verfahren zum Erkennen von Sprachaktivitäten, wobei das Verfahren umfasst:
Empfangen eines Eingangsaudiosignals;
Schätzen eines Leistungsspektrums des Eingangsaudiosignals;
Berechnen eines Energiebandverhältnisses des Eingangsaudiosignals für einen ersten Satz von Frequenzbereichen des Eingangsaudiosignals zu einem zweiten Satz von Frequenzbereichen des Eingangsaudiosignals;
Berechnen eines Entropiewertes des Eingangsaudiosignals;
Berechnen eines Sprachaktivitätsverhältnisses basierend auf dem Entropiewert und dem Energiebandverhältnis;
Ausgeben eines Ausgangssignals, welches angibt, dass das Eingangsaudiosignal eine Sprachepisode umfasst, falls das Sprachaktivitätsverhältnis oberhalb einer vorbestimmten Schwelle liegt;
wobei das Berechnen eines Entropiewerts des Signals das Berechnen einer Spektralebenheit des Signals umfasst; und
wobei die Spektralebenheit berechnet wird, indem ein geometrisches Mittel des Leistungsspektrums und ein arithmetisches Mittel des Leistungsspektrums berechnet wird und das geometrische Mittel des Leistungsspektrums durch das arithmetische Mittel des Leistungsspektrums dividiert wird.

2. Verfahren nach Anspruch 1, wobei das Eingangsaudiosignal eine digitale Audioprobe ist.

3. Verfahren nach Anspruch 1, wobei das Leistungsspektrum berechnet wird, indem ein Periodogram des Eingangsaudiosignals in der Zeitdomäne geschätzt wird.

4. Verfahren nach einem der vorhergehenden Ansprüche, wobei das Eingangsaudiosignal vorverarbeitet wird, bevor das Leistungsspektrum geschätzt wird, indem das Eingangs signal trendbereinigt wird und eine Fensterfunktion auf das Eingangssignal angewendet wird.

5. Verfahren nach einem der vorhergehenden Ansprüche, wobei das Energiebandverhältnis berechnet wird, indem ein Energiebandverhältnis von Energiebändern zwischen 250 Hz und 2000 Hz zu allen anderen Energiebändern in dem Eingangsaudiosignal verwendet wird, wobei die Energiebänder Segmente des Leistungsspektrums sind.

6. Verfahren nach einem der vorhergehenden Ansprüche, wobei das Spektrum in folgenden Bänder unterteilt ist:
0-50 Hz, 50-250 Hz, 250-500 Hz, 500-1000 Hz, 1000-2000 Hz und 2000- fs Hz; oder
0-25 Hz, 25-125 Hz, 125-250 Hz, 250-500 Hz, 500-1000 Hz und 1000-2000 Hz; oder
0-50 Hz, 25-125 Hz, 125-350 Hz, 250-500 Hz, 400-1500 Hz und 1000-2000 Hz.

7. Verfahren nach einem der vorhergehenden Ansprüche, wobei die vorbestimmte Schwelle basierend auf einer gewünschten Empfindlichkeit und/oder Spezifizität bestimmt wird und/oder wobei die vorbestimmte Schwelle in einem Bereich zwischen 50 und 10.000 liegt.

8. Verfahren nach einem der vorhergehenden Ansprüche, wobei das Eingangsaudiosignal zeitlich gefenstert ist und das Verfahren für jedes Fenster ausgeführt wird, und/oder wobei das Eingangsaudiosignal in Fenstern unterteilt ist, welche vorzugsweise eine Dauer zwischen 12 und 120 Millisekunden aufweisen und das Verfahren für jedes Fenster ausgeführt wird.

9. Verfahren nach Anspruch 8, wobei die Fenster überlappende Fenster sind, vorzugsweise wobei die Überlappung zwischen angrenzenden Fenstern eine Dauer zwischen 1 und 110 Millisekunden aufweist.

10. Verfahren nach einem der vorhergehenden Ansprüche, wobei das Eingangsaudiosignal eine Zeitreihe von digitalen Audiodaten von einer Audioaufzeichnungsvorrichtung ist, und/oder wobei das Eingangsaudiosignal eine Zeitreihe von analogen Audiodaten ist, welche vor dem Ausführen des Verfahrens diskretisiert und in eine Zeitserie von digitalen Audiodaten umgewandelt wird.

11. Computerlesbares Medium, umfassend Anweisungen, welche, wenn durch einen Computer ausgeführt, veranlassen, dass der Computer das Verfahren nach einem der vorhergehenden Ansprüche ausführt.

12. Vorrichtung zum Erkennen von Sprachaktivitäten, wobei die Vorrichtung umfasst:
einen Eingang zum Empfangen eines Eingangsaudiosignals;
einen Prozessor, wobei der Prozessor konfiguriert ist, um Folgendes auszuführen:
Schätzen eines Leistungsspektrums des Eingangsaudiosignals;
Berechnen eines Energiebandverhältnisses des Eingangsaudiosignals von einem ersten Satz von Frequenzbereichen des Eingangsaudiosignals zu einem zweiten Satz von Frequenzbereichen des Eingangsaudiosignals;
Berechnen eines Entropiewerts des Eingangsaudiosignals; und
Berechnen eines Sprachaktivitätsverhältnisses, basierend auf dem Entropiewert und dem Energiebandverhältnis; und
einen Ausgang zum Ausgeben eines Ausgangssignals, welches angibt, dass das Eingangsaudiosignal eine Sprachepisode umfasst, falls das Sprachaktivitätsverhältnis oberhalb einer vorbestimmten Schwelle liegt,
wobei das Berechnen eines Entropiewerts des Signals das Berechnen einer Spektralebenheit des Signals umfasst, und
wobei die Spektralebenheit berechnet wird, indem ein geometrisches Mittel des Leistungsspektrums und ein arithmetisches Mittel des Leistungsspektrums berechnet wird und das geometrische Mittel des Leistungsspektrums durch das arithmetische Mittel des Leistungsspektrums dividiert wird.

## Revendications

1. Procédé pour détecter une activité vocale, le procédé comprenant:
la réception d'un signal audio d'entrée;
l'estimation d'un spectre de puissance du signal audio d'entrée;
le calcul d'un rapport de bande d'énergie du signal audio d'entrée pour un premier ensemble de plages de fréquences du signal audio d'entrée sur un second ensemble de plages de fréquences du signal audio d'entrée;
le calcul d'une valeur d'entropie du signal audio d'entrée;
le calcul d'un rapport d'activité vocale sur la base de la valeur d'entropie et du rapport de bande d'énergie;
l'émission en sortie d'un signal de sortie indiquant que le signal audio d'entrée comprend un épisode vocal, si le rapport d'activité vocale se situe au-dessus d'un seuil prédéfini,
dans lequel le calcul d'une valeur d'entropie du signal comprend le calcul d'une planéité spectrale du signal, et
dans lequel la planéité spectrale est calculée en calculant une moyenne géométrique du spectre de puissance et une moyenne arithmétique du spectre de puissance et en divisant la moyenne géométrique du spectre de puissance par la moyenne arithmétique du spectre de puissance.

2. Procédé selon la revendication 1, dans lequel le signal audio d'entrée est un échantillon audio numérique.

3. Procédé selon la revendication 1 dans lequel le spectre de puissance est calculé en estimant un périodogramme du signal audio d'entrée dans le domaine temporel.

4. Procédé selon l'une quelconque des revendications précédentes dans lequel le signal audio d'entrée est prétraité avant l'estimation du spectre de puissance, en éliminant les tendances du signal d'entrée et en appliquant une fonction de fenêtrage au signal d'entrée.

5. Procédé selon l'une quelconque des revendications précédentes dans lequel le rapport de bande d'énergie est calculé en utilisant un rapport de bandes d'énergie entre 250 Hz et 2 000 Hz par rapport à toutes les autres bandes d'énergie dans le signal audio d'entrée, dans lequel les bandes d'énergie sont des segments du spectre de puissance.

6. Procédé selon l'une quelconque des revendications précédentes dans lequel le spectre est divisé en bandes de 0-50 Hz, 50-250 Hz, 250-500 Hz, 500-1 000 Hz, 1 000-2 000 Hz et 2 000-fs Hz; ou
bandes de 0-25 Hz, 25-125 Hz, 125-250 Hz, 250-500 Hz, 500-1 000 Hz et 1 000-2 000 Hz; ou
bandes de 0-50 Hz, 25-125 Hz, 125-350 Hz, 250-500 Hz, 400-1 500 Hz et 1 000-2 000 Hz.

7. Procédé selon l'une quelconque des revendications précédentes dans lequel le seuil prédéfini est déterminé sur la base d'une sensibilité et/ou d'une spécificité désirée, et/ou, dans lequel le seuil prédéterminé est situé dans une plage comprise entre 50 et 10 000.

8. Procédé selon l'une quelconque des revendications précédentes dans lequel le signal audio d'entrée est temporellement fenêtré et le procédé est réalisé pour chaque fenêtre, et/ou dans lequel le signal audio d'entrée est divisé en fenêtres, de préférablement 12 à 120 millisecondes de durée, et le procédé est réalisé pour chaque fenêtre.

9. Procédé selon la revendication 8, dans lequel les fenêtres sont des fenêtres chevauchantes, préférablement dans lequel le chevauchement entre des fenêtres adjacentes se situe entre 1 et 110 millisecondes de durée.

10. Procédé selon l'une quelconque des revendications précédentes, dans lequel le signal audio d'entrée est une série temporelle de données audio numériques provenant d'un dispositif d'enregistrement audio, et/ou dans lequel le signal audio d'entrée est une série temporelle de données audio analogiques qui sont rendues discrètes et converties en une série temporelle audio numériques avant la l'exécution du procédé.

11. Support de stockage lisible par ordinateur comprenant des instructions qui, lorsqu'exécutées par un ordinateur, amènent l'ordinateur à réaliser le procédé selon l'une quelconque des revendications précédentes.

12. Appareil pour détecter une activité vocale, l'appareil comprenant:
une entrée pour la réception d'un signal audio d'entrée;
un processeur, dans lequel le processeur est configuré pour:
estimer un spectre de puissance du signal audio d'entrée;
calculer un rapport de bande d'énergie du signal audio d'entrée d'un premier ensemble de plages de fréquences du signal audio d'entrée sur un second ensemble de plages de fréquences du signal audio d'entrée;
calculer une valeur d'entropie du signal audio d'entrée; et
calculer un rapport d'activité vocale sur la base de la valeur d'entropie et du rapport de bande d'énergie; et
une sortie pour l'émission en sortie d'un signal de sortie indiquant que le signal audio d'entrée comprend un épisode vocal, si le rapport d'activité vocale se situe au-dessus d'un seuil prédéfini,
dans lequel le calcul d'une valeur d'entropie du signal comprend le calcul d'une planéité spectrale du signal, et
dans lequel la planéité spectrale est calculée en calculant une moyenne géométrique du spectre de puissance et une moyenne arithmétique du spectre de puissance et en divisant la moyenne géométrique du spectre de puissance par la moyenne arithmétique du spectre de puissance.
